Europäisches Patentamt

European Patent Office

Office européen des brevets

(11) Publication number: **0 373 393**
**A1**

## EUROPEAN PATENT APPLICATION

(21) Application number: 89121573.3

(22) Date of filing: 21.11.89

(51) Int. Cl.5: **G06F 13/28**

(30) Priority: 22.11.88 JP 296668/88

(43) Date of publication of application:
20.06.90 Bulletin 90/25

(84) Designated Contracting States:
**DE FR GB**

(71) Applicant: **NEC CORPORATION**
**33-1, Shiba 5-chome**
**Minato-ku Tokyo(JP)**

(72) Inventor: **Miura, Katsumi c/o NEC Corporation**
**33-1, Shiba 5-chome**
**Minato-ku Tokyo(JP)**
Inventor: **Yasunaga, Sachiko c/o NEC**
**Corporation**
**33-1, Shiba 5-chome**
**Minato-ku Tokyo(JP)**
Inventor: **Maehashi, Yukio c/o NEC**
**Corporation**
**33-1, Shiba 5-chome**
**Minato-ku Tokyo(JP)**
Inventor: **Katayose, Tsuyoshi c/o NEC**
**Corporation**
**33-1, Shiba 5-chome**
**Minato-ku Tokyo(JP)**

(74) Representative: **Betten & Resch**
**Reichenbachstrasse 19**
**D-8000 München 5(DE)**

(54) Information processing system.

(57) In an information processing system, a local bus to which a central processing unit is not connected is provided. A DMA transfer of data is carried out through the local bus between a peripheral circuit and a data memory. Therefore, a data processing is carried out in the central processing unit simultaneously with the DMA transfer. As a result, an overall processing efficiency is increased.

FIG. 2

## INFORMATION PROCESSING SYSTEM

### FIELD OF THE INVENTION

This invention relates to an information processing system and more particularly, to an information processing system in which a data processing efficiency of a CPU is increased.

### BACKGROUND OF THE INVENTION

In an information processing system utilizing a micro-computer, a large quantity of data are transferred between a peripheral circuit and a memory. In this transfer of data, an interrupt request signal is supplied from the peripheral circuit to an internal central processing unit (defined as "CPU" hereinafter), so that an interrupt routine takes place to transfer data between the peripheral circuit and the memory. As a result, an overhead of the CPU, which is a time for an interrupt processing, is increased to decrease a data processing efficiency in the information processing system. In order to avoid the decrease of the data processing efficiency, a direct memory access (defined as "DMA" hereinafter) controller is provided to exclusively control the transfer of data.

In the DMA transfer of data, a data processing request signal is supplied from the peripheral circuit to the DMA controller, so that the CPU is requested to give a right of controlling address and data buses and read/write signal to the DMA controller temporarily. Where the CPU acknowledges this request, the practice of a program which has been now conducted is interrupted in accordance with the control of the CPU. Thus, the bus control right is taken over from the CPU to the DMA controller. Then, the peripheral circuit and the memory are controlled to carry out the data transfer utilizing bus by the DMA controller, from which address, data and control signals are supplied through the bus to the peripheral circuit and the memory.

However, the aforementioned information processing system has a disadvantage in that, where the DMA transfer of data is carried out , the address, data and control buses are occupied. As a result, a data processing can not be carried out in the CPU. For this reason, an overall data processing efficiency is decreased in the information processing system. Considering a tendency in which a frequency of the DMA data transfer is increased to be carried out in these days by use of high speed peripheral circuits such as communication peripheral circuits, etc., a data processing capacity of the CPU will be more badly affected to be decreased in the future.

### SUMMARY OF THE INVENTION

Accordingly, it is an object of the invention to provide an information processing system in which an overall data processing efficiency is much increased, even if a frequency of a DMA data transfer is increased to be carried out.

According to the invention, an information processing system, comprises:

a central processing unit for the practice of a data processing in accordance with a program supplied through a first bus from a program memory;

at least one peripheral circuit for the control of data input and output; and

means for controlling a first access of said central processing unit and a second access of said peripheral circuit through a second bus to a data memory;

wherein said second access is carried out for a direct memory access transfer of data between said peripheral circuit and said data memory without hindering said practice of said data processing in said central processing unit; and

said controlling means selects one of said first and second accesses, when said first and second accesses are requested simultaneously.

### BRIEF DESCRIPTION OF THE DRAWINGS

The invention will be explained in more detail in conjunction with appended drawings, wherein:

Fig. 1 is a block diagram showing a conventional information processing system,

Fig 2 is a block diagram showing an information processing system in a first preferred embodiment according to the invention,

Fig. 3 is a block diagram showing a part of the information processing system in the first preferred embodiment,

Fig. 4 is a block diagram showing an information processing system in a second preferred embodiment according to the invention, and

Figs. 5 and 6 are block diagrams showing an information processing system in third and fourth preferred embodiments according to the invention.


## DESCRIPTION OF THE PREFERRED EMBODIMENTS

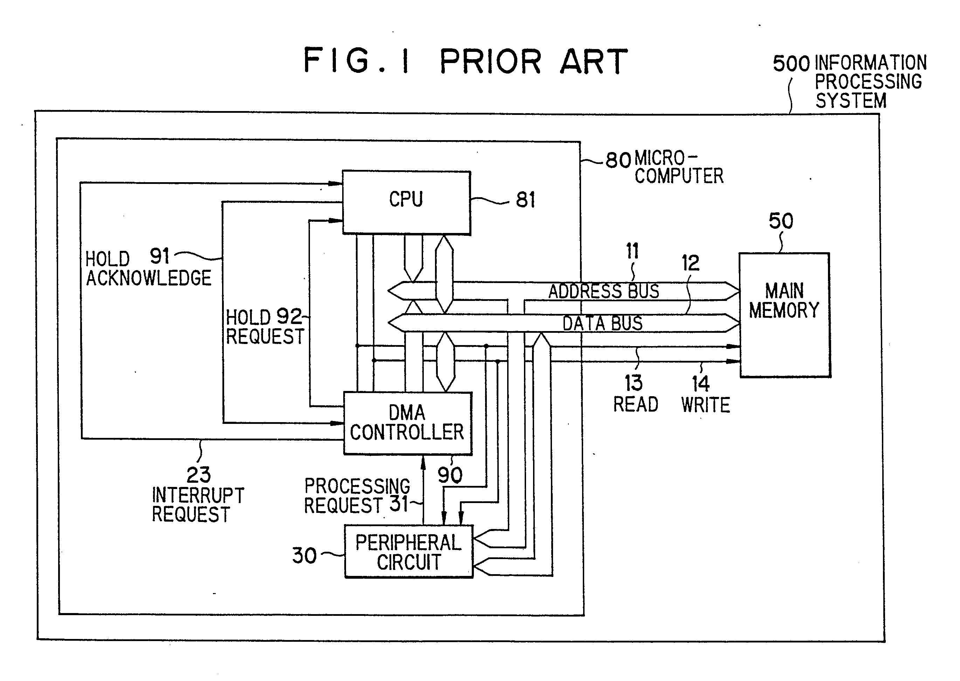

Before explaining an information processing system in the first and second preferred embodiments according to the invention, the conventional information processing system will be explained in Fig. 1.

The conventional information processing system 500 includes a micro-computer 80 and a main memory 50, wherein the micro-computer 80 includes a CPU 81, a DMA controller 90, and a peripheral circuit 30.

The CPU 81 includes a programmable counter (not shown, and defined as "PC" hereinafter), a program status word (not shown, and defined as PSW), various registers (not shown), etc., and controls the practice of various commands, and the operation of the entire information processing system 500 including the giving of a right to the DMA controller 90 and receiving of the right therefrom for controlling an address bus 11 read/write, a data bus 12, and read/write signals 13 and 14. When the DMA controller 90 detects a processing request signal 31 supplied from the peripheral circuit 30, a hold request signal 92 and a hold acknowledge signal 91 are exchanged to carry out the giving and receiving of the bus control right between the DMA controller 90 and the CPU 81, so that a DMA data transfer is realized between the peripheral circuits 30 and the main memory 50. The DMA controller 90 includes an internal register (not shown) for storing a destination address information, a source address information, and the number of data to be transferred, and a buffer register (not shown) for temporarily storing data in the state of the DMA transfer, so that the internal register is controlled to store the destination address information, the source address information, and the number of the data in advance by the CPU 81.

The main memory 50 includes a program memory (not shown) for the CPU 81, and a data memory (not shown), wherein the data memory stores various data for the information processing system 500 transferred through the data bus 11 at addresses specified by address signals on the address bus 12 in accordance with the write signals 14 by the control of any one of the CPU 81 and the DMA controller 90. The data memory supplies various stored data in accordance with the read signals 13 in the same manner.

One which has abandoned the bus control right between the CPU 81 and the DMA controller 90 becomes a high impedance state at output terminals connected to the address bus 11, the data bus 12, and the control bus for the read/write signals 13 and 14, while the other one which has obtained the bus control right controls the buses 11 and 12, and the read/write signals 13 and 14 to be "active" or "inactive" in accordance with output signals thereof.

In operation, the CPU 81 has been checking at all time whether or not the hold request signal 92 is generated in the DMA controller 90, while it controls each part of the information processing system 500 in accordance with a predetermined program.

Where a necessity of the DMA data transfer occurs in the peripheral circuit 30, because of, for instance, the receiving or transmitting of serial data therein, the peripheral circuit supplies the processing request signal 31 to the DMA controller 90. Then, the hold request signal 92 is turned to be "active" by the DMA controller 90, so that the DMA controller 90 demands the receiving of the bus control right from the CPU 81, whereby the address bus 11, the data bus 12, and the read/write signals 13 and 14 are controlled.

Thus, a programmed process which has been carried out in the CPU 81 is interrupted due to the active state of the hold request signal 92, so that contents of the PC, the PSW, and the various registers are held in the state of the programmed process therein, and the hold acknowledge signal 91, which informs the DMA controller 90 of the giving of the bus control right, is turned to be "active".

The DMA controller 90 which has acquired the bus control right controls the peripheral circuit 30 and the main memory 50 to carry out the DMA transfer by use of an address information of a DMA transfer region of the main memory 50 and an address information of the peripheral circuit 30. Thus, data read from the peripheral circuit 30 are written into the main memory 50 as explained below.

At first, a source address information of the peripheral circuit 30 is supplied from the DMA controller 90 to the address bus 11, and the read signal is turned to be "active" simultaneously, so that the state of "active" is conveyed to the peripheral circuit 30, thereby reading data therefrom to the data bus 12. The data which was read from the peripheral circuit 30 is temporarily stored in the internal buffer register of the DMA controller 90, from which a destination address information of the main memory 50 is then supplied to the address bus 11, and the write signal 14 is turned to be "active" simultaneously. Thus, the data which were read from the peripheral circuit 30 and are stored in the buffer register of the DMA controller 90 are supplied to the data bus 12 to be stored at the destination address of the main memory 50.

On the other hand, where data are read from the main memory 50 to be stored in the peripheral circuit 30 in accordance with the DMA data transfer, a reading and writing procedure becomes reverse to the above explained procedure with respect to the peripheral circuit 30 and the main memory 50.

Each time at which the DMA data transfer finishes, the number of data to be transferred which is stored in the register of the DMA controller 90 is decreased by one, so that the DMA data transfer routine finishes, when the number of the register becomes zero. In other words, the DMA data transfer routine continues, as long as the number of the register is more than zero, and the processing request signal 31 remains supplied from the peripheral circuit 30 to be detected in the DMA controller 90.

On the other hand, where a content of the data number register does not become zero, and the processing request signal 31 does not remain supplied from the periphery circuit 30, the DMA controller 90 controls the hold request signal 92 to be "inactive", so that the DMA controller 90 informs the CPU 81 of the abandonment of the bus control right. When the bus control right is taken over to the CPU 81, the programmed process which has been interrupted during the DMA transfer re-starts in the CPU 81, in which the processing of data transferred to the main memory 50 is then carried out, because the PC, the PSW, and the various registers preserves the former states.

In this manner, when the DMA data transfer is carried out either from the peripheral circuit 30 to the main memory 50 or from the main memory 50 to the peripheral circuit 30, so that no data remains left to be transferred, the DMA controller 90 controls the interrupt request signal to be "active". Consequently, the CPU 81 is informed that the DMA data transfer finishes totally. Then, a predetermined interrupt processing is carried out in the CPU 81. That is , an interrupt processing routine in which data stored in the main memory 50 in accordance with the DMA transfer are generally processed is controlled to be carried out.

As understood from the above explanation, the conventional information processing system has the disadvantage as described before.

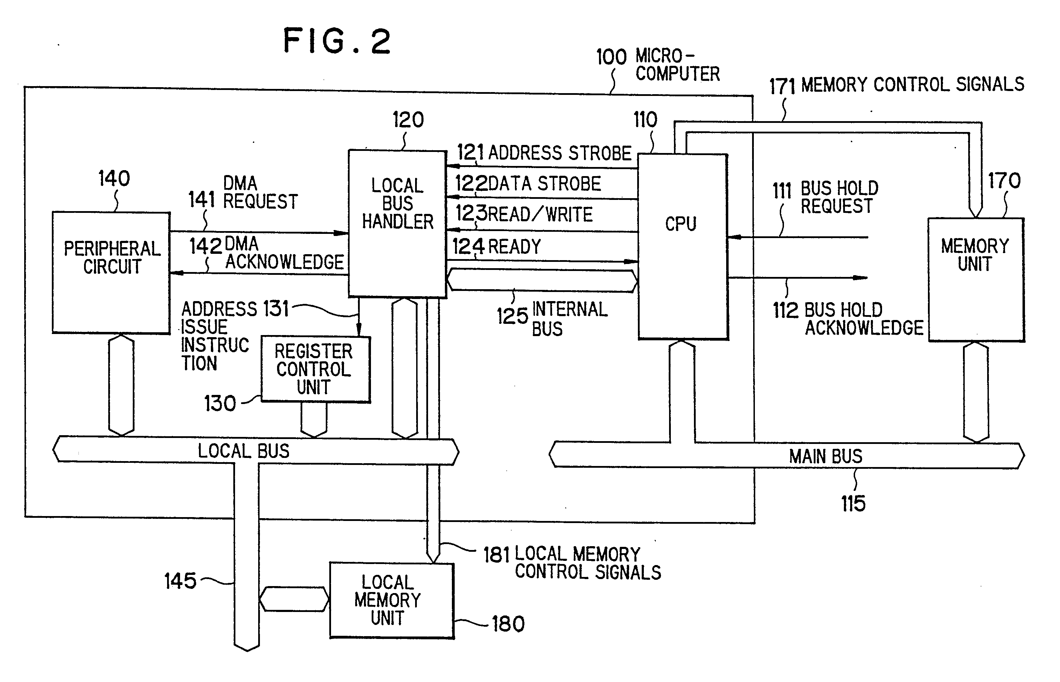

Next, an information processing system in the first preferred embodiment will be explained in Fig.2.

The information processing system comprises a micro-computer 100 and a memory unit 170. The micro-computer 100 includes a CPU 110, a local bus handler 120, a DMA register control unit 130, and a peripheral circuit 140, wherein the CPU 110 is connected to a main bus 115, while the local bus handler 120, the DMA register control unit 130, and the periphery circuit 140 are connected to a local bus 145.

In the information processing system, the CPU 110 controls the practice of a program stored in the memory unit 170 and checks the presence of a bus hold request signal 111 to be supplied from an external circuit (not shown). Where a DMA transfer request signal 141 is supplied from the peripheral circuit 140, data are transferred between the peripheral circuit 140 and a local memory unit 180 in accordance with operation of the local bus handler 120 and the DMA register control unit 130. The practice of the program is carried out in the CPU 110 independently with the DMA transfer taking place by use of the local bus 145. After the carrying out of the DMA transfer, data stored in the local memory unit 180 are referenced through the local bus handler 120 by the CPU 110.

In operation, when the bus hold request signal 111 supplied from the external circuit is turned to be "active", the CPU 110 ceases the practice of the program temporarily, and controls a bus hold acknowledge signal 112 to be "active.", thereby giving a bus control right to the external circuit. When the external circuit finishes the bus control, so that the bus hold request signal 111 is turned to be "inactive", the CPU 110 re-starts the practice of the program.

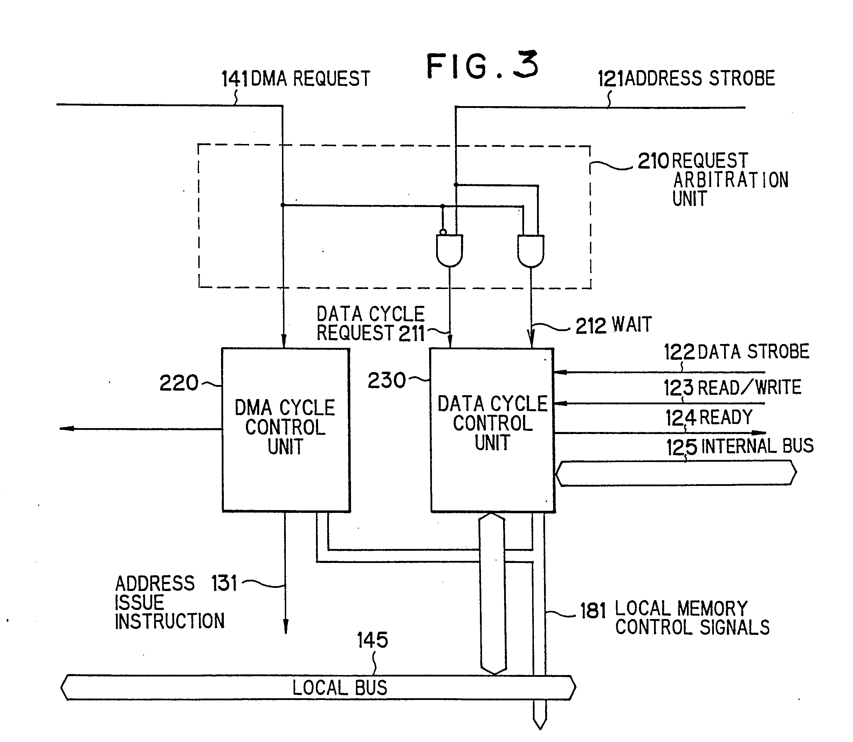

Fig. 3 shows an internal structure of the local bus handler 120 including a request arbitration unit 210, a DMA cycle control unit 220, and a data cycle control unit 230.

In Figs. 2 and 3, the DMA data transfer will be explained. Where the peripheral circuit 140 receives data from the outside, the DMA request signal 141 supplied therefrom is turned to be "active", so that the peripheral circuit 140 requests the local bus handler 120 to transfer the data therefrom to the local memory unit 180, in which the DMA cycle control unit 220 controls an address issue instruction signal to be "active". As a result, the DMA register control unit 130 supplies addresses of the DMA transfer to the local bus 145. Then, the DMA cycle control unit 230 of the local bus handler 120 controls a DMA acknowledge signal 142 to be "active", so that the data received in the peripheral circuit 140 are supplied to the local bus 145.

In this circumstance, when the address output is supplied from the DMA register control unit 130, and the data output is supplied from the peripheral circuit 140, a group of local memory control signals 181 including an address strobe signal, a data strobe signal, read/write signals, etc. are supplied from the DMA cycle control unit 220 to the local memory unit 180, so that the data are written at the destination address of

4

the local memory unit 180.

On the contrary, the data stored in the local memory unit 180 are referenced by the CPU 110 as explained below.

At first, the CPU 110 controls an address strobe signal 121 to be "active", thereby asking the local bus handler 120 to access the local memory unit 180. In the request adjusting unit of the local bus handler 120, a data cycle request 211 is turned to be "active" in accordance with a below truth table.

| DMA REQUEST 141 | ADDRESS STROBE 121 | DATA CYCLE REQUEST 211 | WAIT 212 |
|---|---|---|---|
| 0 | 1 | 1 | 0 |
| 0 | 0 | 0 | 0 |
| 1 | 1 | 0 | 1 |
| 1 | 0 | 0 | 0 |

When the DMA request signal 141 becomes "active", the wait signal 212 is turned to be "active", so that a demand of the CPU 110 is preserved. This state is conveyed to the CPU 110 in accordance with "active" of a ready signal 124. Here, if it is assumed that the DMA request signal 141 is "inactive" and the data cycle request signal 211, by which the demand of the CPU 110 is accepted, is "active", an address which is supplied from the CPU 110 to an internal bus 125 is supplied from the data cycle control unit 230 to the local bus 145. Subsequently, the read/write signal 123 is referenced by the data cycle control unit 230 which thereby decides whether the demand of the CPU 110 is "memory-read" or "memory-write". Where the demand is decided to be "memory-read", data read from the local memory unit 180 are supplied to the internal bus 125 at a timing of a data strobe signal 122.

When an address output is supplied from the data cycle control unit 230, and data are read from the local memory unit 180 or written thereinto, the group of the local memory control signals 181 including the address strobe signal, the data strobe signal, the read/write signal, etc. are supplied from the data cycle control unit 230 to the local memory unit 180, so that the data are read at a predetermined address of the local memory unit 180 or written at a predetermined address thereof.

The DMA cycle control unit 220 and the DMA register control unit 130 function in the same manner as a conventional DMA controller explained before, and the function of the data cycle control unit 230 is the same as a bus control function of a conventional CPU.

In the first preferred embodiment, the peripheral circuit 140 may be replaced by plural peripheral circuits. In such a case, a DMA controller may select one of DMA request signals supplied from the plural peripheral circuits to carry out a DMA transfer having the highest priority. As a matter of course, the DMA controller may be replaced by plural DMA controllers.

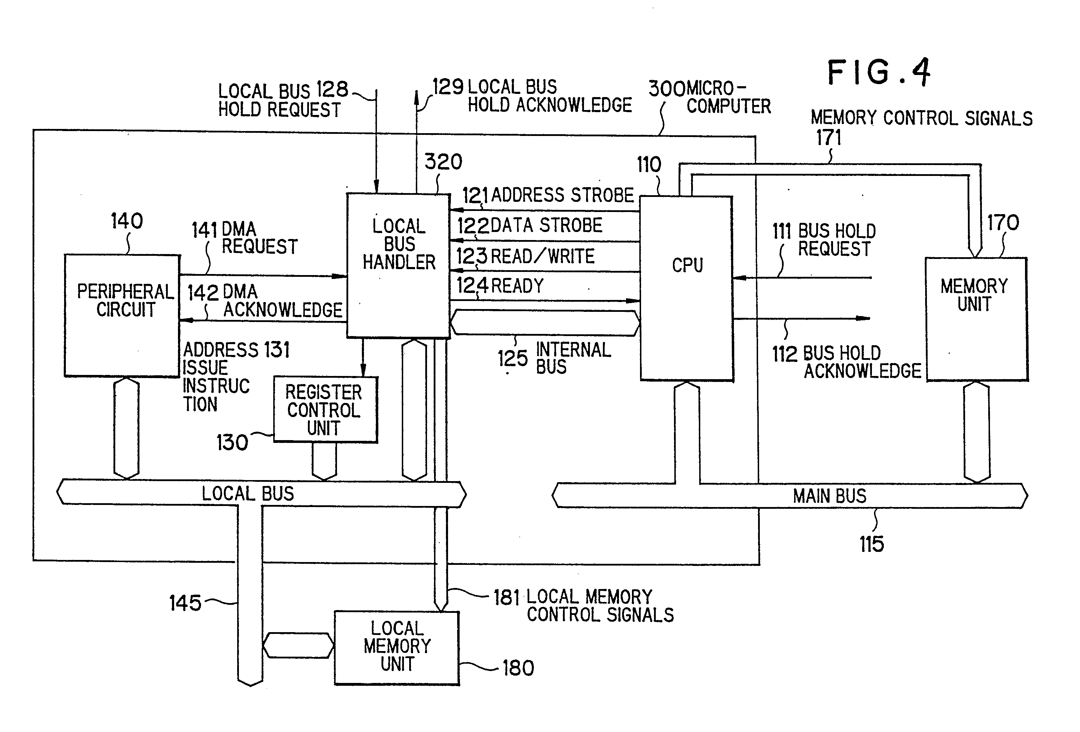

Fig. 4 shows an information processing system in the second preferred embodiment according to the invention, wherein like parts are indicated by like reference numerals as used in Fig. 2, except that a local bus hold request signal 128 and a local bus hold acknowledge signal 129 are set therein. These signals 128 and 129 are used to be connected to an external DMA controller (not shown) or a host CPU (not shown) provided outside the micro-computer 300. Where the host CPU is used, the micro-computor 300 is regarded as a slave computer to provide a multi-processor structure. The functions of the local bus hold request and acknowledge signals 128 and 129 are the same as those of the bus hold request and acknowledge signals 111 and 112.

If it is assumed that the host CPU is connected to the micro-computer 300, data which are stored in the local memory unit 180 in accordance with a DMA transfer by use of the micro-computer 300 are directly read and written by the host CPU. In this case, the practice of a program is not absolutely hindered in the CPU 110, because the bus hold request signal 111 is not necessary to be used on the side of the CPU 110.

As explained above, a local bus used for a DMA transfer is provided independently from a main bus used for the practice of a program in a CPU in an information processing system according to the invention. Therefore, the practice of a program is never interrupted by a DMA transfer. In other words, the practice of a program in the CPU is realized simultaneously with the carrying out of a DMA transfer. As a result, an overall processing efficiency is extremely increased in the information processing system. In accordance with the use of various high speed peripheral circuits such as highly developed communication apparatus, etc., a frequency of a DMA transfer is much increased to be carried out. In such a circumstance, the information processing apparatus according to the invention is advantageously used.

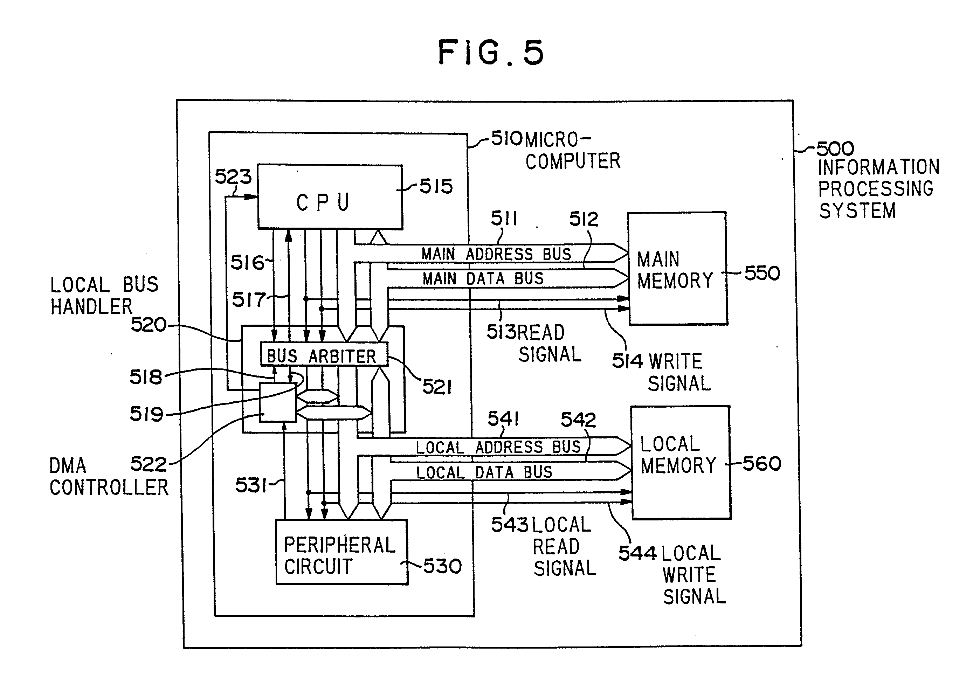

Fig. 5 shows an information processing system in the third embodiment according to the invention. The information processing system 500 comprises a micro-computer 510, a main memory 550, and a local memory 560. The micro-computer 510 includes a CPU 515, a local bus handler 520, a peripheral circuit 530. The CPU 515 includes a PC (not shown), a PSW (not shown), and various registers, and controls an overall operation of the information processing system 500 including the control of the practice of various commands and the control of a main address bus 511, a main data bus 512, and read/write signals 513 and 514. Furthermore, the CPU 515 controls a CPU local bus request signal 516 to be "inactive" in the state that the main memory 550 is used. On the other hand, where the local memory 560 is accessed, the CPU 515 controls the local bus request signal 516 to be "active", thereby requesting the receiving of a control right of a local address bus 541 and a local data bus 542.

In the local bus handler 520, when a DMA controller 522 detects a processing request signal 531 supplied from the peripheral circuit 530, the DMA controller 522 asks a bus arbiter 521 to give a control right of the local address bus 541 and the local data bus 542 to the DMA controller 522 by turning a DMA local bus request signal 518 to be "active". On the other hand, the CPU 515 asks the bus arbiter 521 to give the control right of the local address bus 541 and the local data bus 542 to the CPU 515 by turning the CPU local bus request signal 516 to be "active". The bus arbiter 521 arbitrates the two requests to give the bus control right to one of the DMA controller 522 and the CPU 515. For instance, where the control right is given to the CPU 515, a CPU local bus ready signal 517 is turned to be "active", and a DMA local bus ready signal 519 is turned to be "inactive". As a matter of course, where the two requests are not collided with each other, the control right is given to the CPU 515 and the DMA controller 522 without any condition. Where the two requests occurs at the same time, the DMA local bus ready signal 519 is turned to be "active", while the CPU local bus ready signal 517 is turned to be "inactive". Futhermore, where one of the CPU 515 and the DMA controller 522 has already acquired the control right to use the local address bus 541 and the local data bus 542, and the other one has asked the bus arbiter 521 to give the control right thereto, a local bus ready signal of the latter is always turned to be "inactive".

Where the DMA controller 522 has received the control right of the local address bus 541 and the local data bus 542, a DMA transfer is carried out between the peripheral circuit 530 and the local memory 560. On the contrary, where the CPU 515 has received the control right, the practice of read/write operation is carried out in the local memory 560.

The DMA controller 522 includes an internal register for storing a source address information, a destination address information, and the number of data to be transferred, and a buffer register for storing data in the state of the transfer operation temporarily. The internal register is set in advance to store the source and destination addresses and the data number.

In the local memory 560, data transferred from and to the peripheral circuit 530 by use of the DMA controller 522 are stored.

The main memory 550 includes a program memory for the CPU 515 and a data memory.

In operation, the bus arbiter 521 of the local bus handler 520 checks the CPU local bus request signal 516 from the CPU 515 and the DMA local bus request signal 518 from the DMA controller 522 at any time.

Where a cause of a DMA transfer occurs in the peripheral circuit 530 in accordance with the transmitting and receiving of serial data, etc., the peripheral circuit 530 supplies a processing request 531 to the DMA controller 522.

Where the processing request 531 is conveyed to the DMA controller 522, the DMA controller 522 controls the DMA local bus request signal 518 to be "active".

Here, if it is assumed that the CPU 515 is practicing a program process by use of the main memory 50 and the CPU local bus request signal 516 is "inactive", the control right of the local address bus 541 and the local data bus 542 is given to the DMA controller 522 in accordance with the arbitration function of the bus arbiter 521 by turning the DMA local bus ready signal 519 to be "active".

The DMA controller 522 which has acquired the control right carries out the DMA transfer by use of an address information in a DMA transfer region of the local memory 560 and an address information of the peripheral circuit 530. At first, a case where data read from the peripheral circuit 530 are written into the local memory 560 in the DMA transfer will be explained. The DMA controller 522 supplies a destination address information of the peripheral circuit 530 to the local address bus 541, and controls the local read signal 543 to be "active", so that this state is conveyed to the peripheral circuit 530, thereby supplying data to be transferred to the local data bus 542. The transfer data are temporarily stored in the buffer register of the DMA controller 522.

Subsequently, the DMA controller 522 supplies a destination address information stored in the local memory 560 to the local address bus, and controls the local write signal 544 to be "active". At the same time, the DMA controller 522 supplies data to be transferred to the local data bus 542, so that the data are stored in the local memory 560.

On the other hand, in a case where data read from the local memory 560 are written into the peripheral circuit 530, the order of the reading and writing between the local memory 560 and the peripheral circuit 530 controlled by the DMA controller 522 is reverse in the same DMA transfer procedure.

When a DMA transfer is carried out, a content of the register for storing the data number to be transferred is renewed in the DMA controller 522. Here, if the data number is not zero, and the DMA controller 522 continues detecting the processing request signal 531 supplied from the peripheral circuit 530, the DMA local bus request signal 518 remains "active". In this circumstance, if the CPU 515 controls the practice of a program by use of the main memory 550, and the CPU local bus request signal 516 remains "inactive", the DMA local bus ready signal 519 remains "active" and the DMA controller 522 continues holding the control right of the local address bus 541 and the local data bus 542 in accorcance with the arbitration function of the bus arbiter 521, so that the DMA transfer is carried out continuously Furthermore, where the data number does not become zero, and the CPU local bus request signal 516 and the DMA local bus request signal 518 are produced (active) simultaneously, the control right is given to the DMA controller 522 in accordance with the arbitration function of the bus arbiter 521, so that the DMA transfer is carried out continuously. On the other hand, where the data number does not become zero, and the CPU local bus request signal 516 is turned to be "active" earlier than the DMA local bus request signal 518, the control right is given to the CPU 515 in accordance with the arbitration function of the bus arbiter 521, so that the DMA transfer is interrupted.

In this manner, where the data number becomes zero, and where data to be transferred from the local memory 560 to the peripheral circuit 530 becomes null in accordance with the continuous or interrupted DMA transfer, the DMA controller 522 controls the interrupt request signal 123 to be "active", so that the completion of the DMA transfer is conveyed to the CPU 515.

When the CPU 515 detects the interrupt request signal 523 to be "active", an interrupt processing routine in which a predetermined interrupt processing is practiced is controlled to be carried out. In this circumstance, although the CPU 515 controls the CPU local bus request signal 516 to be "active" and asks the bus arbiter 521 to give the control right thereto, the DMA local bus request signal 518 is not turned to be "active", because the DMA transfer has already finished, so that the CPU local bus ready signal 517 remains "active". Thus, the continuous data reference of the CPU 515 can be carried out at the local memory 560.

As understood from the above, if a program is set, such that the local memory 560 is not accessed by the CPU 515, before the DMA transfer finishes, the processing of the CPU 515 is not interrupted at all by the DMA transfer.

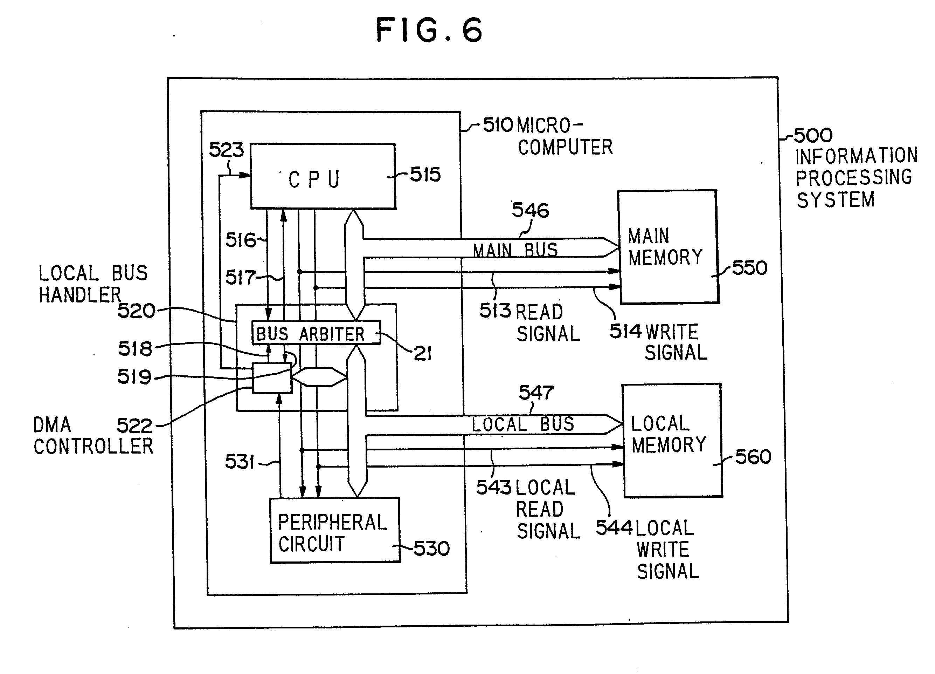

Fig. 6 shows an information processing system in the fourth preferred embodiment according to the invention, wherein like parts are indicated by like reference numerals as used in Fig. 5, except for the difference on a main bus and a local bus. In more detail, a main bus 546 and a local bus 547 are multiplex buses in which address and data are controlled to be transferred on a time division basis.

In operation, an object to which a control right relates is a local bus 547 in accordance with the arbitration of the CPU local bus request signal 516 and the DMA local bus request signal 518 controlled by the bus arbiter 521 in the local bus handler 520.

In the fourth embodiment, the number of external terminals for address and data buses is decreased in the micro-computer 510. On the other hand, one of the main bus 546 and the local bus 547 may be separate buses. In this case, a hard-ware such as a bus multiplexer available at the present stage is added in the local bus handler 520 to control the different bus patterns.

Although the invention has been described with respect to specific embodiment for complete and clear disclosure, the appended claims are not to be thus limited but are to be construed as embodying all modification and alternative construction that may occur to one skilled in the art which fairly fall within the basic teaching herein set forth.

## Claims

1. An information processing system, comprising:
a central processing unit for the practice of a data processing in accordance with a program supplied through a first bus from a program memory;
at least one peripheral circuit for the control of data input and output; and

means for controlling a first access of said central processing unit and a second access of said peripheral circuit through a second bus to a data memory;

wherein said second access is carried out for a direct memory access transfer of data between said peripheral circuit and said data memory without hindering said practice of said data processing in said central processing unit; and

said controlling means selects one of said first and second accesses, when said first and second accesses are requested simultaneously.

2. An information processing system, according to claim 1, wherein:

said controlling means, includes:

a first bus control means connected to said central processing unit;

a second bus control means connected to said peripheral circuit; and

a bus arbitration means connected to said first and second bus control means; whereby:

said DMA transfer is carried out by use of said second bus control means;

said practice of said data processing is carried out by use of said first control means; and

said bus arbitration means controls to select one of said first and second accesses.

# FIG. I PRIOR ART

500 INFORMATION PROCESSING SYSTEM

80 MICRO-COMPUTER

CPU 81

HOLD 91 ACKNOWLEDGE

HOLD 92 REQUEST

ADDRESS BUS 11 12

DATA BUS

MAIN MEMORY 50

13 READ 14 WRITE

DMA CONTROLLER

23 INTERRUPT REQUEST

PROCESSING REQUEST 31

90

30 PERIPHERAL CIRCUIT

EP 0 373 393 A1

# FIG. 2

100 MICRO-COMPUTER

171 MEMORY CONTROL SIGNALS

120

110

121 ADDRESS STROBE

122 DATA STROBE

123 READ/WRITE

124 READY

125 INTERNAL BUS

140

DMA

141 REQUEST

142 DMA ACKNOWLEDGE

PERIPHERAL CIRCUIT

LOCAL BUS HANDLER

CPU

111 BUS HOLD REQUEST

112 BUS HOLD ACKNOWLEDGE

170

MEMORY UNIT

ADDRESS 131 ISSUE INSTRUCTION

REGISTER CONTROL UNIT

130

LOCAL BUS

MAIN BUS

115

181 LOCAL MEMORY CONTROL SIGNALS

145

LOCAL MEMORY UNIT

180

EP 0 373 393 A1

# FIG. 3

141 DMA REQUEST

121 ADDRESS STROBE

210 REQUEST ARBITRATION UNIT

DATA CYCLE REQUEST 211

212 WAIT

122 DATA STROBE

123 READ/WRITE

124 READY

125 INTERNAL BUS

220

DMA CYCLE CONTROL UNIT

230

DATA CYCLE CONTROL UNIT

ADDRESS 131 ISSUE INSTRUCTION

181 LOCAL MEMORY CONTROL SIGNALS

145

LOCAL BUS

EP 0 373 393 A1

FIG.4

LOCAL BUS 128 HOLD REQUEST

129 LOCAL BUS HOLD ACKNOWLEDGE

300 MICRO-COMPUTER

MEMORY CONTROL SIGNALS 171

320

110

140

141 DMA REQUEST

LOCAL BUS HANDLER

121 ADDRESS STROBE

122 DATA STROBE

123 READ/WRITE

124 READY

111 BUS HOLD REQUEST

170

CPU

PERIPHERAL CIRCUIT

142 DMA ACKNOWLEDGE

MEMORY UNIT

ADDRESS 131 ISSUE INSTRUCTION

125 INTERNAL BUS

112 BUS HOLD ACKNOWLEDGE

REGISTER CONTROL UNIT

130

LOCAL BUS

MAIN BUS

115

145

181 LOCAL MEMORY CONTROL SIGNALS

LOCAL MEMORY UNIT

180

EP 0 373 393 A1

# FIG. 5

INFORMATION PROCESSING SYSTEM 500

510 MICRO-COMPUTER

CPU 515

523

516
517

LOCAL BUS HANDLER 520

BUS ARBITER 521

518
519

DMA CONTROLLER 522

531

PERIPHERAL CIRCUIT 530

511  512 MAIN ADDRESS BUS

MAIN DATA BUS

513 READ SIGNAL

514 WRITE SIGNAL

MAIN MEMORY 550

541  542 LOCAL ADDRESS BUS

LOCAL DATA BUS

543 LOCAL READ SIGNAL

544 LOCAL WRITE SIGNAL

LOCAL MEMORY 560

EP 0 373 393 A1

# FIG. 6

MAIN BUS 546

MAIN MEMORY 550

513 READ SIGNAL

514 WRITE SIGNAL

510 MICRO-COMPUTER

500 INFORMATION PROCESSING SYSTEM

523

CPU 515

516

517

LOCAL BUS HANDLER

520

518

519

DMA CONTROLLER 522

BUS ARBITER

21

531

PERIPHERAL CIRCUIT 530

LOCAL BUS 547

LOCAL MEMORY 560

543 LOCAL READ SIGNAL

544 LOCAL WRITE SIGNAL

EP 0 373 393 A1

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-4 771 286 (NIESSEN et al.)<br>* Abstract; column 5, lines 15-59; figure 1 *<br>--- | 1-2 | G 06 F 13/28 |
| A | EP-A-0 282 825 (MITSUBISHI DENKI K.K.)<br>* Column 4, line 36 - column 6, line 40; figure 3 *<br>----- | 1-2 | |

TECHNICAL FIELDS
SEARCHED (Int. Cl.5)

G 06 F 13

The present search report has been drawn up for all claims

| Place of search | Date of completion of the search | Examiner |
|---|---|---|
| THE HAGUE | 28-03-1990 | MCDONAGH F.M. |

EPO FORM 1503 03.82 (P0401)